# EUROPÄISCHE PATENTSCHRIFT

(11) **EP 1 236 536 B1**
(45) Veröffentlichungstag und Bekanntmachung des Hinweises auf die Patenterteilung: **06.08.2003**
(21) Anmeldenummer: 01250378.5
(22) Anmeldetag: 25.10.2001
(51) Int. Cl.: B23Q 1/00, B23Q 17/00, G08C 23/04

(54) **Bearbeitungssystem mit beweglichen Werkstückträger- und Werkstückspann-Modulen**
Machining system with moveable workpiece holding and clamping modules
Système d'usinage de pièces avec modules de serrage et de support mobiles

(30) Priorität: 29.11.2000 DE 10059193
(43) Veröffentlichungstag der Anmeldung: 04.09.2002
(73) Patentinhaber: HOHENSTEIN Vorrichtungsbau und Spannsysteme GmbH, 09337 Hohenstein-Ernstthal (DE)
(72) Erfinder: Franzki, Michael, 78166 Donaueschingen (DE)
(74) Vertreter: Grosse, Ulrich

(56) Entgegenhaltungen:
- DE-A- 3 816 135
- DE-A- 19 843 575
- DE-U- 29 922 068
- FR-A- 2 566 572
- US-A- 4 610 440
- US-A- 5 564 872

## Beschreibung

Die Erfindung geht von dem im Oberbegriff des Patentanspruches 1 definierten Gegenstand aus.

Für die spanende Bearbeitung von Werkstücken auf Bearbeitungssystemen, zum Beispiel Bohr-Fräs-Bearbeitungszentren, sind diese so strukturiert, daß neben den stationären Modulen linearbewegliche oder schwenkbewegliche Werkstückträger-Module und Werkstückspann-Module Systembestandteile sind.

Linearbewegliche Werkstückträger- und Werkstückspann-Module sind zum Beispiel Maschinenpaletten, die auf Palettenträger-Modulen genau lineargeführt von einer Spann- und Entspannstation in die Bearbeitungsposition im Arbeitsraum des Bearbeitungssystems und zurück in bestimmten Paletten-Wechsel-Zeittakten gesteuert, bewegt werden.
Auf der Ober- oder Spannfläche der Maschinenpalette sind Spannbaugruppen oder Spannvorrichtungen angeordnet, mit denen Werkstücke positioniert und gespannt sind. Nach DE-Patent 4108545 ist eine derartige Maschinenpalette als Werkstückträger- und als Werkstückspann-Modul mit integrierten Funktionssteuerungs-, Verteilungs- und Spanneinrichtungen für Drucköl-Spannung ausgestattet. Ober eine an der Stirnseite angeordnete Mehrfach-Kupplungseinheit wird in einer der Endstellungen an der Spann- und Entspannstation anliegend mit dieser eine Drucköl-Leistungsmedien-Schnittstelle gebildet, mit der auch Signale und Informationen Ober Druckveränderungen übertragbar sind.

Schwenkbewegliche Werkstückträger- und Werkstückspann-Module sind Teilapparate oder Schwenkvorrichtungen, wobei wälzgelagerte Teilscheiben in ihren Schwenkbewegungen durch Direkt- oder Indirekt-Teilungselemente genau positioniert werden. Auf der Spannfläche der Teilscheiben werden die Spannbaugruppen oder Spannvorrichtungen für die Werkstückpositionierung und -spannung angeordnet. Nach DE-Patent 197 48 332 ist ein Werkstückträger- und Werkstückspann-Modul als eine beidseitig hängend gelagerte Schwenkvorrichtung für Werkstückspannung mittels Druckluft und Drucköl, in einem Maschinensystem mit Werkzeugmaschinen angeordnet, ausgebildet. In einer bestimmten Schwenkstellung der Schwenkvorrichtung bilden beide nach einer linearen Relativbewegung einer Spannstation in Richtung der Schwenkvorrichtungen mittels einer Mehrfach-Kupplungseinheit eine Drucköl- oder Druckluft-Leistungsmedien-Schnittstelle. In dieser verbundenen Lage sind die Module, bezogen auf Signale über Druckänderungen des Leistungsmediums, auch informationsverbunden.

Durch das DE-Gebrauchsmuster 29922068, and welchen der Oberbegriff des Anspruch 1 basiert, ist es bekannt, Werkstückspann-Module auf Bearbeitungszentren neben den Schnittstellen zur Übertragung von hydraulischen und pneumatischen Leistungsmedien nach entsprechender Linearbewegung des Werkstückspann-Modules in die Kupplungsstellung auch Schnittstellen für die Übertragung elektrischer Energie und für Informationsdaten anzuordnen. Die Bediener-Sicherheit und die zunehmend gewichtserleichterte und trotzdem lagestabile Ausbildung der Spannvorrichtungen bedingt eine intelligente Spannvorrichtungs-Strukturierung, in dem technisch und sicherheits-technisch relevante Informationen über die Lage und den sicheren Spannzustand der Werkstücke sowie zur Funktionsüberwachung im automatisierten Prozeß durch Positionier- und Zustandssensoren ermittelt, Ober Logikbausteine ausgewertet und auf die Steuerung des Bearbeitungssystems übertragen werden. Zur Gewährleistung des Schutzgrades sind Späne und Kühlflüssigkeiten von diesen Schnittstellen fernzuhalten.

Dabei ist der Stand der Technik durch ein manuelles oder mechanisches Zueinander- oder Auseinanderbewegen der Kupplungshälften als kontinuierlich gleichbleibende achsgleiche Bewegungsabläufe gekennzeichnet. Die Anwendungsdauer der Kupplungen ist verschleißbedingt begrenzt.

Bekannter Stand der Technik ist auch eine drahtlose Ausbildung von Energie- und Informationsschnittstellen durch elektromagnetisch, über induktive Spulen, erzeugte und übertragene Energie.
So ist beispielhaft aus dem DE-Patent 19709088 ein Werkstückaufspanntisch bekannt, wobei zwischen dem schwenkbeweglichen Werkstückträger-Modul und dem stationären Grundkörper Ober einen Magnethaltering Ver- und Einstellenergie ausgeübt und übertragen wird.
Die beispielhaft benannten Lösungen von linearbeweglichen und schwenkbeweglichen Werkstückträger- und Werkstückspann-Modulen sind zunächst als Informationsschnittstellen nur für die Feststellung und Auswertung von Druckänderungen bei Druckluft und Drucköl ausgelegt.
Soweit Elektroenergie als Leistungsmedium für Leistungsfunktionen, wie die Bewegung der Module und als Erzeugungsenergie für zu übertragende Informationen genutzt wird, bedarf es gesonderter Kabelverbindungen mit Steckerkupplungen oder flexibler Kabel mit Schlingreserven bei jeweils gleich großer entgegengerichteter Schwenkbewegung. Damit ist die Schwenkbeweglichkeit der Werkstückträger- und Werkstückspann-Module eingeschränkt.
Die drahtlose Informationsübertragung, z. B. bei elektromagnetischen Informationsschnittstellen ist physikalisch und technisch bedingt auf ein geringes Abstands- und Längenmaß der Linearbewegung des Werkstückträger- und Werkstückspann-Modules gegenüber der stationären Baugruppe des Bearbeitungssystems begrenzt.

Durch das US-Patent 5564872 ist es bekannt, zwischen gegeneinandergerichtet drehbeweglichen Maschinen- und Antriebs-Modulen, die Elektroenergie für Leistungsfunktionen oder Erzeugerenergie zu übertragen, ohne daß Kabel, Leitungen und Kupplungen als Verbindungsmittel zwischen beweglichen und stationären Maschinen-Modulen bewegungs- und prozeßhinderlich sind.
Durch Anwendung und Übertragung von Druckluft, Energiewandlung und Energiepufferung wird auf dem beweglichen Modul ein autarkes Schwachstrom-Energieversorgungssystem geschaffen, welches Grundlage einer drahtlosen Informationsschnittstelle unter Verwendung von Infrarot ist.

Eine Anwendung dieser Art von Informationsschnittstellen ist bei der Übertragung und Auswertung von technischen und sicherheitstechnisch relevanten Zustandsinformationen der Werkstückspannung nicht bekannt
Dieses Problem fehlender Ausbildung von Informationsschnittstellen an bewegten Modulen für die Werkstückspannung sowie bei Spannvorrichtungen und Bearbeitungssystemen wird durch die im Patentanspruch 1 aufgeführten Merkmale gelöst.

Die mit der Erfindung erzielbaren Vorteile bestehen insbesondere in je einer geschaffenen
- schwenkbaren Hydraulik-Spannvorrichtung, in deren Achslage die drahtlose Informations-Signal-Übertragung und Leistungsmedien-Zu- und Abführungsleitungen abgeschirmt aufgenommen sind
- autarke Energieversorgung in und auf Spannplatten
- schwenkstellungs- und entfernungsunabhängige Informationsschnittstelle in und um die codierbare Achse des bewegten Werkstückträger- und Werkstückspann-Modules

Weitere Ausgestaltungen der Erfindung sind in den Patentansprüchen 2 bis 4 angegeben.

Diese weitergehenden Ausgestaltungen ergänzen die dargestellten Vorteile der erfinderischen Lösung bezüglich einer
- federnden Ausbildung der in Achslage befindlichen Drehdurchführung und Ausbildung als Genauigkeits-Lagerelement
- Auswechselbarkeit der Module und der Hydraulik-Spannvorrichtung selbst
- Spann- und Entspannpositionierung an der Schnittstelle zwischen Spannpalette und stationärem Aufspannkörper.

Ausführungsbeispiele der Erfindung und deren weitere Ausgestaltung sind in den Figuren dargestellt und werden im Folgenden näher beschrieben:
- Fig. 1: eine vereinfachte Teilansicht der Schnittstellen
- Fig. 2: eine Vorderansicht einer schwenkbaren Hydraulik-Spannvorrichtung
- Fig. 3: eine Teil-Ansicht in Richtung A nach Fig. 2
- Fig. 4: eine Vorderansicht eines Aufspannkörpers mit schwenkbaren Spannvorrichtungen

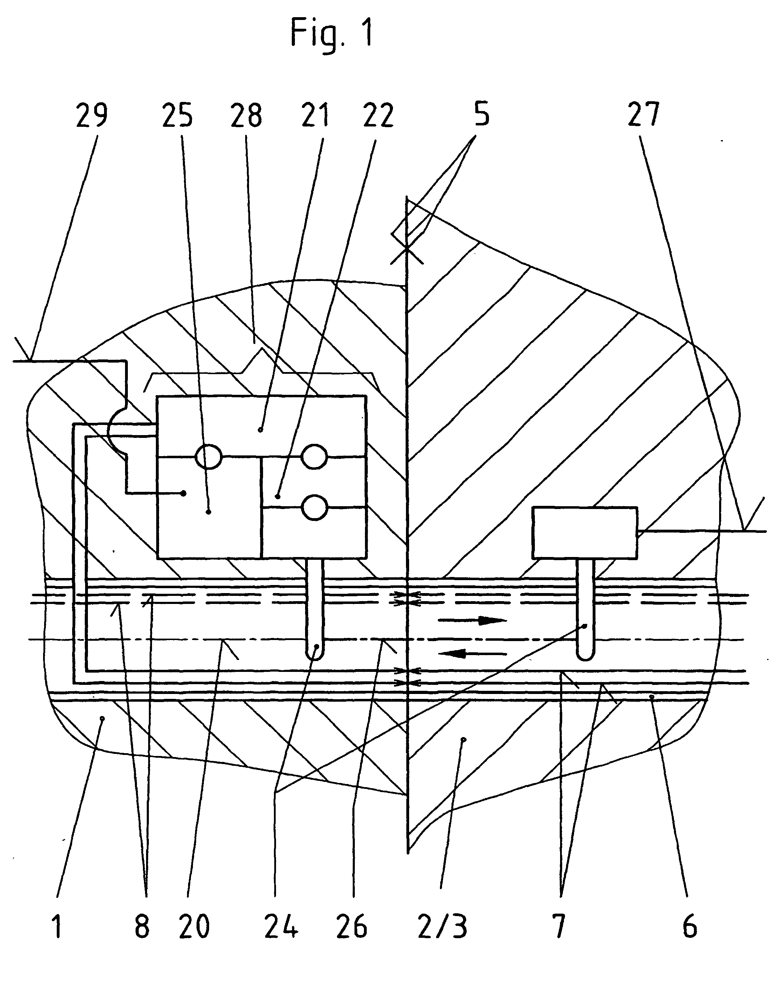

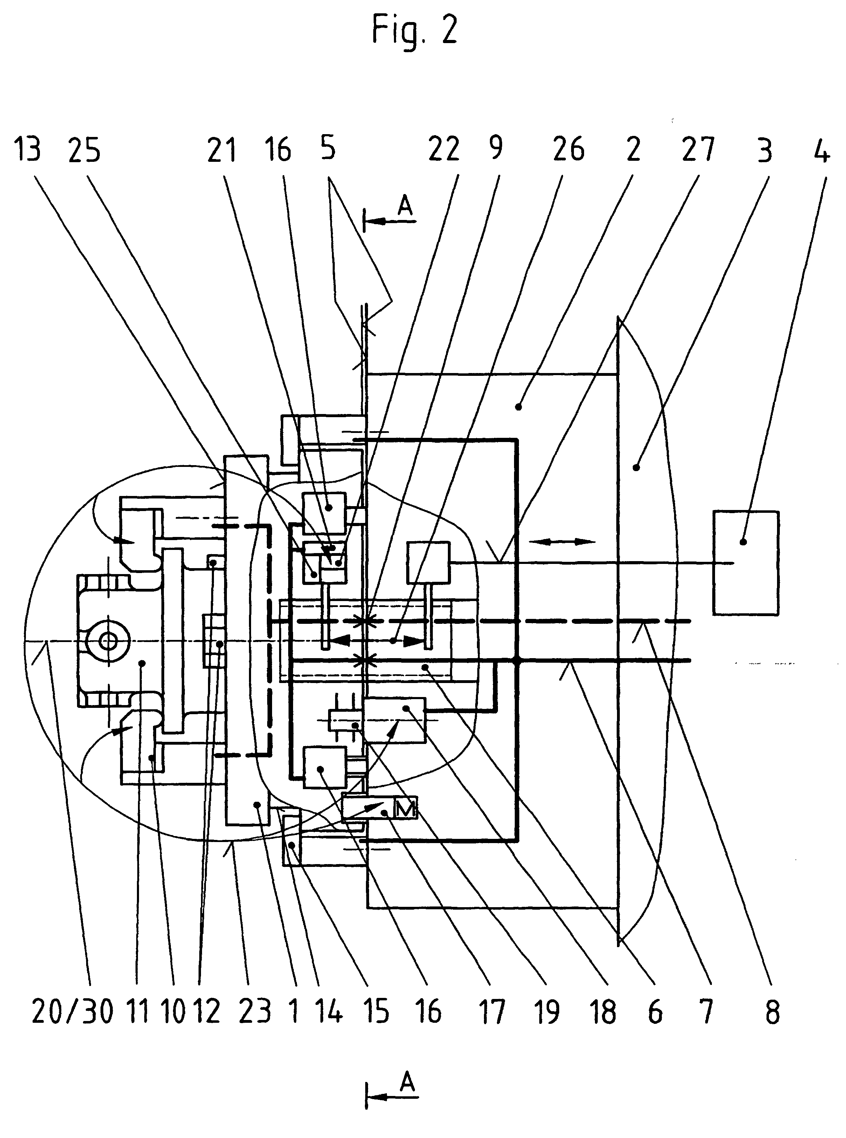

In Fig. 1 und Fig. 2 ist die Schnittstellen-Verbindung zwischen einem linear- oder schwenkbeweglichen Werkstückträger- und Werkstückspann-Modul, hier als Spannplatte 1 ausgebildet, und einem stationären Bearbeitungssystem 3, hier als stationärer Aufspannkörper 2 ausgebildet, dargestellt.
Die Schwenkbewegung der Spannplatte 1 erfolgt in Teilschritten um die codierbare Achse 20. Die Schnittstelle 5 zwischen den einander zugeordneten, gegenüberliegenden Flächen ist als eine mechanische, als eine Fluidschnittstelle, hier die Druckluftzu- und abführung 7 und die Druckölzu- und -abführung 8 umfassend, und als eine Informationsschnittstelle ausgebildet.

In einer Achslage der codierbaren Achse 20 verlaufend, ist in den Körpern der schwenkbaren Spannplatte 1 und dem stationären Aufspannkörper 2 eine rohrförmig ausgebildete Drehdurchführung 6 angeordnet In dieser Drehdurchführung 6 sind außer den Leitungen für Druckluftzu- und -abführung 7 und Druckölzu- und abführung 8, axial liegend, die drahtlose wechselseitig gerichtete Informations-Signal-Übertragung 26, zwischen den zwei in die Drehdurchführung 6 hineinragenden Infrarot-Sender- und Empfängerelementen 24, die Infrarot-Informations-Schnittstelle 23 bildend, angeordnet Durch die Anordnung der Infrarot-Informations-Schnittstelle 23 in der Drehdurchführung 6 ist diese gegenüber Spänen und Emulsionen abgeschirmt.

Die rohrförmige Drehdurchführung 6 ist an ihrem in der Spannplatte 1 angeordneten stirnseitigen Ende als Kegelstumpf ausgebildet, mit dem sie in eine entsprechend dimensionierte, axialgerichtet federnde Kegelbuchse, in der Achslage der Spannplatte 1 angeordnet, ragt.
Die Drehdurchführung bildet damit das Schwenklager für die Spannplatte 1 um die Schwenkachse 30. An der Spannplatte 1 ist außerdem ein Schwachstrom-Energieversorgungssystem 28 autark angeordnet.

Dieses besteht aus einem Energiewandler 21, der die zugeführte Druckluft in Elektroenergie wandelt, aus einem Elektroenergie-Puffer 25, welcher als nachladbares Batteriesystem ausgebildet ist, und aus den Elektro-Versorgungsleitungen 29.
Mit dem Schwachstrom-Energieversorgungssystem 28 ist die drahtlose Informations-Signal-Übertragung 26 verbunden. Diese ist als eine, entlang der Schwenkachse 30 der Spannplatte 1 als codierbare Achse 20 verlaufend, in jeder eingestellten Schwenk- und Abstandslage der Spannplatte 1 gegenüber dem stationären Aufspannkörper 2 wirksame, Infrarot-Informations-Schnittstelle 23 ausgebildet. Die Informationen werden mittels der, in den beidseitig, in der Spannplatte 1 und in dem Aufspannkörper 2 angeordneten, Logik-Bausteinen 22, Sender- und Empfängerelementen 24, mittels der Signalübertragungsleitung 27, zur Steuerung 4 des stationären Bearbeitungssystems 3 hin gerichtet, Aktoren und Sensoren, wechselseitig gerichtet übertragen.

Die Spannplatte1 bildet die Grundplatte einer in Teilschritten schwenkbaren Hydraulik-Spannvorrichtung für das auf der Aufspannfläche 13 aufliegende Werkstück 11.
Die Realisierung der Schwenkbewegung der Spannplatte 1 erfolgt über den druckluftbetätigten Schwenkantrieb 18 und das Antriebselement 19, hier als Zahnradtrieb ausgebildet. Die Zuführung von Druckluft erfolgt über die Druckluftzu- und abführung 7.
Die Schwenkstellungen der Spannplatte 1 werden mittels eines Richt-Indexbolzens 17 indexiert und genau positioniert. In dieser Position werden die vor der Schwenkbewegung angehobenen drei Ringnut-Klemmhaken 15, druckluftbetätigt, in die am Umfang der Spannplatte 1 angeordneten Positionierringnut 14 eingeschwenkt und die Spannplatte 1 an dem Aufspannkörper 2 festgeklemmt. In dieser Situation ist die mechanische und Fluid-Schnittstelle 5 in Funktion.

Vor einem erneuten Schwenken der Spannplatte 1 wird diese durch Ausschwenken der Ringnut-Klemmhaken 15 aus der Positionierringnut 14 freigegeben, mittels Betätigung der Anhebe-Elemente 16 aus der indexierten Position durch Anheben gelöst. Damit ist an der mechanischen und an der fluidischen Schnittstelle 5 die unmittelbare Verbindung unterbrochen. Durch Ventile sind die jeweiligen Leitungsenden der Druckluftzu- und abführung 7 und der Druckölzu- und Abführung druckhaltend geschlossen. Die in Spannfunktion gebrachten Drucköl-Schwenkspanner 10 spannen das mittels Werkstückpositioniermittel 12 in wiederholbarer Fertigungslage befindliche Werkstück 11.
Über die Infrarot-Informations-Schnittstelle 23 sind für eine Überwachung der Stellungen, Funktion und sicherheitstechnischen Prozeßüberwachung die aktive Spannfunktion der Drucköl-Schwenkspanner 10, die Positionierfunktion des Richt-Indexbolzen 17 und die Bewegungsfunktion des Schwenkantriebes 18 mit der Steuerung 4 im stationären Bearbeitungssystems 3 wechselseitig gerichtet informationsverbunden.

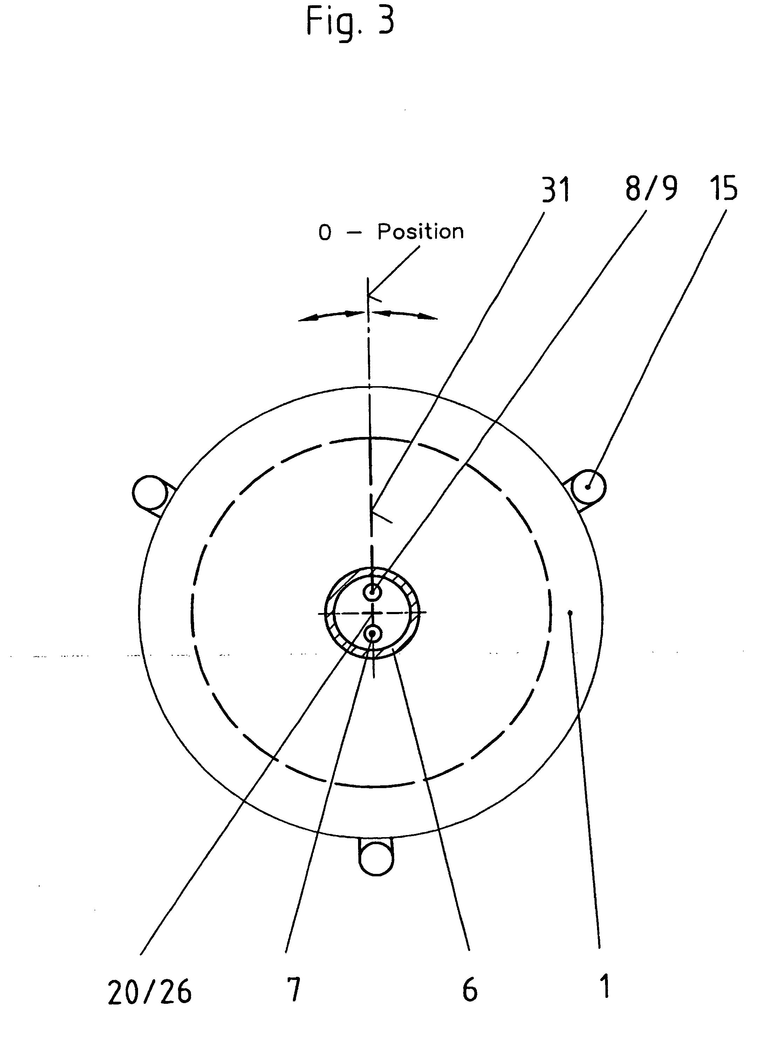

In der in Fig. 3 dargestellten Sicht auf die Unterseite der schwenkbeweglichen Spannplatte 1 der in Fig. 2 dargestellten Hydraulik-Spannvorrichtung ist die Spannplatte 1 als runde Scheibe ausgebildet, die mit drei Ringnut-Klemmhaken an oder auf dem hier nicht dargestellten stationären Aufspannkörpern festgeklemmt wird.

In der rohrförmigen Drehdurchführung ist achsgleich mit der codierbaren Achse 20 die drahtlose Informations-Signal-Übertragung 26 angeordnet. In jeder geänderten Schwenkstellung der Spannplatte 1 ist damit die Informations-Schnittstelle in Funktion.
In Wandnähe der Drehdurchführung 6 verlaufend sind die Rohrleitungen der Druckluftzu- und -abführung 7 und der Druckölzu- und abführung 8 angeordnet. In einer als "0-Position" bezeichneten Schwenkstellung der Spannplatte trifft eine Drucköl-Verbindungsleitung 31 der Druckölversorgung für die nicht dargestellten Drucköl-Schwenkspanner 10 auf die Druckölzu- und abführung 8 und schließt eine Drucköl-Kupplungsverbindung 9. In dieser Position befindet sich die Spann- und Entspannposition der hydraulischen Spannvorrichtung.

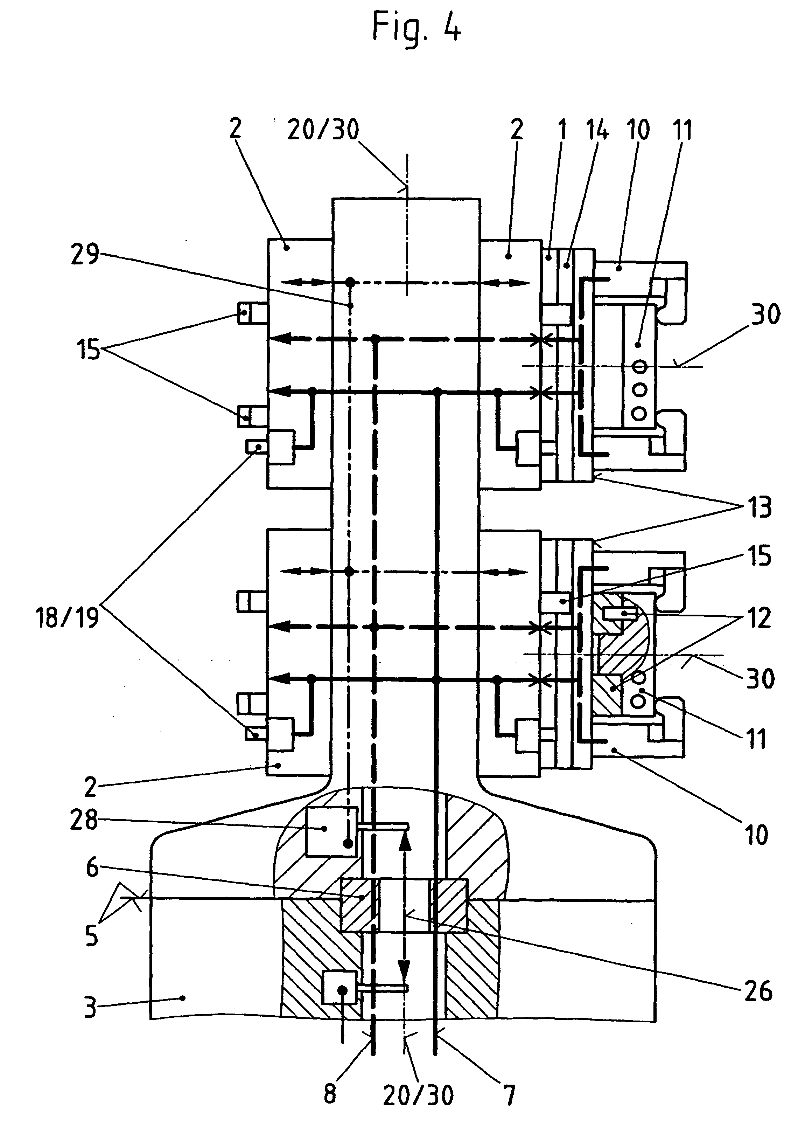

In Fig. 4 ist ein abhebbarer Aufspannkörper 2 dargestellt, an dem vier schwenkbewegliche Werkstückspann-Module, hier Spannplatten 1 für Hydraulik-Spannvorrichtungen, an beiden Seiten der senkrechten Wand angeordnet sind. Die mechanische und Fluid-Schnittstelle 5 und die Informationsschnittstelle, als drahtlose Informations-Signal-Übertragung 24 ausgebildet, befinden sich zwischen der Grundfläche des Aufspannkörpers und der Oberfläche des Maschinentisches des stationären Bearbeitungssystems 3. Das autarke Schwachstrom-Energieversorgungssystem 28 steht Ober ein System von Elektro-Versorgungsleitungen 29 mit den vier auf den Spannplatten 1 angeordneten Hydraulik-Spannvorrichtungen in Funktionsverbindung. Die Drehdurchführung 6 ist als Kupplungsbuchse ausgeführt. In deren großdimensionierten Bohrung und in den Hohlräumen des Aufspannkörpers 2 sowie des Maschinentisches sind die Druckluftzu- und abführung 7, die Druckölzu- und abführung 8 und die drahtlose Informations-Signal-Übertragung 26 aufgenommen.

### Bezugszeichenliste

| | | |
|---|---|---|
| 1 | Spannplatte | (eines Werkstückspann-Modules) |
| 2 | stationärer Aufspannkörper | |
| 3 | stationäres Bearbeitungssystem | |
| 4 | Steuerung | (des stationären Bearbeitungssystems 3) |
| 5 | mechanische und Fluid-Schnittstelle | (zwischen 1 und 2 oder 2 und 3) |
| 6 | Drehdurchführung | |
| 7 | Druckluftzu- und -abführung | |
| 8 | Druckölzu- und -abführung | |
| 9 | Drucköl-Kupplungsverbindung | (in Spann- und Entspannposition) |
| 10 | Drucköl-Schwenkspanner | |
| 11 | Werkstück | |
| 12 | Werkstück-Positioniermittel | |
| 13 | Aufspannfläche | (der Spannplatte 1) |
| 14 | Positionier-Ringnut | (an Spannplatte 1) |
| 15 | Ringnut-Klemmhaken, druckluftbeätigt | (für Spannplatte 1) |
| 16 | Anhebe-Elemente | (für Spannplatte 1) |
| 17 | Richt-Indexbolzen | (für Spannplatte 1) |
| 18 | Schwenkantrieb, druckluftbetätigt | (für Spannplatte 1) |
| 19 | Antriebselement | (des Schwenkantriebes 18) |
| 20 | codierbare Achse | |
| 21 | Energiewandler | (von Druckluft in Elektroenergie) |
| 22 | Logikbaustein | |
| 23 | Infrarot-Informations-Schnittstelle | (aus je zwei Sender- und Empfängerelementen 24 und 26 bestehend) |
| 24 | Infrarot-Sender- und Empfängerelement | |
| 25 | Elektroenergie-Puffer | (Batterie und Akkumulator) |
| 26 | drahtlose Informations-Signal-Übertragung | |
| 27 | Signal-Übertragungs-Leitung | (zwischen 23 und 4 |
| 28 | autarkes Schwachstrom-Energieversorgungssystem | (bestehend aus 7, 21, 25, 29) |
| 29 | Elektro-Versorgungsleitungen | |
| 30 | Schwenkachse | |
| 31 | Drucköl-Verbindungsleitung | |

## Patentansprüche

1. Bearbeitungssystem mit beweglichen Werkstückträger- und Werkstückspann-Modulen, darunter Werkstückspannvorrichtungen auf beweglichen Spannplatten, die funktionsabhängig um ein bestimmtes Entfernungsmaß von dem stationären Bearbeitungssystem entfernt, entlang einer vorausbestimmten codierbaren Achse schwenkbeweglich verstellt und in einer Bearbeitungsposition des auf diesen positionierten und gespannten Werkstückes eingestellt sind, und in dieser Entfernungslage mit dem Bearbeitungssystem informationsverbunden bleiben, wobei an je einer Schnittstelle (5) der einander zugeordneten gegenüberliegenden Flächen eines Werkstückträger-Modules oder eines Werkstückspann-Modules und des stationären Bearbeitungssystems (3), entlang der codierbaren Achse (20) eine Druckluftzu- und -abführung (7) angeordnet ist,
**dadurch gekennzeichnet, daß** die Druckluft zu- und - abführung
mit einem in dem Werkstückträger-Modul oder in dem Werkstückspann-Modul angeordneten autarken Schwachstrom-Energieversorgungssystem (28), koordiniert steuerbar, leitungsverbunden ist, und
daß das autarke Schwachstrom-Energieversorgungssystem (28) aus einem Energiewandler (21), zur Wandlung von Druckluft in Elektroenergie, aus einem Elektroenergie-Puffer (25), als nachladbares Batteriesystem strukturiert und aus Elektro-Versorgungsleitungen (29) besteht,
daß eine mit dem Schwachstrom-Energieversorgungssystem (28) verbundene drahtlose Informations-Signal-Übertragung (26), entlang der Schwenkachse (30), als codierbare Achse (20) verlaufend, in jeder eingestellten Schwenk- oder Abstandslage zwischen dem bewegten Werkstückträger-Modul oder dem Werkstückspann-Modul einerseits und dem stationären. Bearbeitungssystem (3) andererseits, durch eine Infrarot-Informations-Schnittstelle (23) gebildet wird und der bewegte Werkstückträger-Modul oder der Werkstückspann-Modul einerseits und das stationäre Bearbeitungssystem andererseits, wechselseitig gerichtet, miteinander informationsverbunden sind und aus, beidseitig der Informationsschnittstelle angeordneten, Logik-Bausteinen (22), Sender- und Empfängerelementen (24), einer Signalübertragungsleitung (27), zur Steuerung (4) des Bearbeitungssystemes (3) hin gerichtet, und aus Aktoren sowie Sensoren besteht,
daß die Schnittstelle (5) zwischen dem stationären Aufspannkörper (2) und jeder der als Spannplatten (1) ausgebildeten schwenkbaren Werkstückspann-Module als eine innen rohrförmig hohle Drehdurchführung (6), deren Mittenachse (30) mit der codierbaren Achse (20) achsgleich verlaufend ausgebildet ist, und
daß in der Drehdurchführung (6) die drahtlose Informations-Signal-Übertragung (26), abgeschirmt von den prozeßbedingt entstehenden Spänen und Emulsionen am Bearbeitungssystem (3), die Druckluftzu- und -abführung (7) und die Druckölzu- und -abführung (8) aufgenommen sind, und
daß von dem in der Spannplatte (1) integriert angeordneten autarken Schwachstrom-Energieversorgungssystem (28) ausgehend, über Elektro-Versorgungsleitungen (29) die Infrarot-, Stellungs- und Prozeßüberwachung der Drucköl-Schwenkspanner (10), der Hydraulik-Spannvorrichtung, der Richt-Indexbolzen (17) und des druckluftbetriebenen Schwenkantriebes (18 und 19) für die Bewegung der Spannplatte (1) erfolgt.

2. Bearbeitungssystem mit beweglichen Werkstückträger- und Werkstückspann-Modulen nach Patentanspruch 1,
**dadurch gekennzeichnet,**
**daß** die Drehdurchführung (6), in dem in der Spannnplatte (1) angeordneten stirnseitigen Ende als Kegelstumpf ausgebildet ist, und mit diesem in eine, entsprechend dimensionierte, axialgerichtet federnde Kegelbuchse ragend, ein Schwenklager für die Spannplatte (1) bildet.

3. Bearbeitungssystem mit beweglichen Werkstückträger- und Werkstückspann-Modulen nach Patentanspruch 1,
**dadurch gekennzeichnet,**
**daß** eine Hydraulik-Spannvorrichtung auf einer Spannplatte (1) nach druckluftbetätigtem schwenkendem Entriegeln der Ringnut-Klemmhaken (15) aus der Ringnut (14), entlang der Achse (20) bewegt, und entlang der Schwenkachse (30) auswechselbar ist.

4. Bearbeitungssystem mit beweglichen Werkstückträger- und Werkstückspann-Modulen nach Patentanspruch 1,
**dadurch gekennzeichnet,**
**daß** in der 0- oder Ausgangsposition der geschwenkten Spannplatte (1) gegenüber dem stationären Aufspannkörper (2) eine Drucköl-Kupplungsverbindung (9) der Drucköl-Schwenkspanner (10) mit der Druckölzu- und -abführung (8) besteht und eine Spann- und Entspannposition gebildet ist.

## Claims

1. *Machining system with moveable workpiece holding and clamping modules*, amongst them workpiece clamping fixtures on moveable clamping plates, distanced with a defined distance size according to the machining job from stationary machining system, moved along a predefined, encodable axis with swivel motion and adjusted in one machining position of the workpiece being positioned and clamped on them, that in this distanced position remain linked for information exchange with the machining system, where one compressed-air supply and removal (7) is arranged along encodable axis (20) on any interface (5) of the opposite surfaces assigned one to the other of a workpiece holding module or a workpiece clamping module and the stationary machining system (3),
**characterised in**
**that** compressed air supply and removal (7) is connected by pipes with the independent, light-current power supply system (28) arranged in the workpiece holding module or in the workpiece clamping module, in order to allow a coordinate control, and
**that** the independent, light-current power supply system (28) includes a power converter (21) transforming compressed air into electrical energy, an electric energy buffer (25) being designed as reloadable battery system, and power supply lines (29),
**that** one wireless information signal transmission (26) linked with the light-current power supply system (28), running along swivel axis (30) as encodable axis (20) is formed, in any adjusted swivel or distance position whatever, between the moved workpiece holding module or the workpiece clamping module on one hand, and the stationary machining system (3) on the other hand, by means of an infrared information interface (23) and that moved workpiece holding module or workpiece clamping module on one hand, and stationary machining system on the other hand are two-way alternate linked for information exchange, consisting of logic elements (22), transmitting and receiver elements (24), actuators and sensors being arranged on both sides of the information interface, as well as of a signal transmission line (27) towards the control (4) of the machining system (3),
**that** interface (5) between stationary mounting body (2) and any of the swivelling workpiece clamping modules designed as clamping plates (1) is designed as hollow, inside tubular, rotating union (6), the centre axis (30) of which lays in the same axis as encodable axis (20), and
**that** wireless information signal transmission (26), sealed against process chips and emulsions produced at the machining system (3), compressed air supply and removal (7) and forced-feed oil supply and removal (8) are accommodated in rotating union (6), and
**that** infrared, position and process monitoring of the swivelling tighteners (10) actuated by forced-feed oil, the hydraulic clamping fixture, the aligning indexing pins (17) and the compressed air-actuated semirotary actuator (18 and 19) for the swivel plate's (1) movement are performed from the independent light-current power supply system (28) integrated in clamping plate (1), via power supply lines (29).

2. *Machining system with moveable workpiece holding and clamping modules as per patent claim 1,*
**characterised in**
**that** the rotating union's (6) front end arranged in clamping plate (1) is designed as truncated cone that is rising up into a duly dimensioned, axially arranged, spring-mounted taper sleeve, forming thus a swivel bearing for clamping plate (1)

3. *Machining system with moveable workpiece holding and clamping modules as per patent claim 1,*
**characterised in**
**that** a hydraulic clamping fixture moved along encodable axis (20) on a clamping plate (1) after moving the annular-grooved cramps (15) out of the annular groove (14) by means of swivelling unlocking performed by compressed air is interchangeable along swivel axis (30).

4. *Machining system with moveable workpiece holding and clamping modules as per patent claim 1,*
**characterised in**
**that** a forced-feed oil coupling (9) of the pivoted tighteners (10) actuated by forced-feed oil is established with the forced-feed oil supply and removal (8) and a clamping and unclamping position is formed when swivelled clamping plate (1) enters in 0-position or initial position with regard to stationary mounting body (2).

## Revendications

1. *Système d'usinage avec modules mobiles de support de pièce et de serrage de pièce,* dont des dispositifs prises de pièces sur des plaques de serrage mobiles, qui, étant éloignés d'une distance déterminée du système d'usinage stationnaire en fonction de la tâche à réaliser, sont déplacés le long d'un axe codable prédéterminé de façon à permettre un mouvement pivotant, et réglés à une position d'usinage de la pièce positionnée et serrée sur ceux-ci et qui, dans cette position éloignée, restent unis pour l'échange d'informations avec le système d'usinage, où une admission et une sortie d'air comprimé (7) est disposée le long de l'axe codable (20) dans une interface (5) entre les faces affectées et opposées d'un module de support de pièce ou d'un module de serrage de pièce et du système d'usinage stationnaire (3),
**caractérisé en ce que**
l'amenée et la sortie d'air comprimé 7 est liée moyennant des tuyaux et de façon à être contrôlée d'une manière coordinée, avec un système indépendent d'alimentation en énergie à courant b.t. (28) étant disposé dans le module de support de pièce ou dans le module de serrage de pièce et
que le système indépendent d'alimentation en énergie à courant b.t. (28) est constitué d'un convertisseur d'énerie (21) transformant de l'air comprimé en énergie électrique, d'un tampon d'énergie électrique (25) étant configuré comme système de batterie rechargeable, et de câbles d'alimentation électrique (29),
qu'une transmission sans fil de signaux d'information (26) passant le long de l'axe de pivotement (30) en tant qu'axe codable (20) liée avec le système indépendent d'alimentation en énergie à courant b.t. (28) est consituée par une interface d'information à l'infrarouge (23) dans chaque position réglée de pivotement ou d'écartement entre le module mobile de support de pièce ou le module de serrage de pièce d'une part et le système d'usinage stationnaire (3) de l'autre, et que le module mobile de support de pièce ou le module de serrage de pièce d'une part et le système d'usinage stationnaire d'autre part sont liés entre eux par communication simplex pour l'échange d'information et qu'elle est constituée d'éléments logiques (22), d'éléments émetteur et récepteur (24), d'acteurs et de détecteurs étant disposés sur les deux côtés de l'interface d'information, .ainsi que d'une ligne de transmission de signaux (27) allant vers la commande (4) du système d'usinage (3).
que l'interface (5) entre le corps de serrage stationnaire (2) et chacun des modules pivotants de serrage de pièce configurés en tant que plaques de serrage (1) est réalisée comme passage tournant creux et tubulaire à l'intérieur (6) dont l'axe du milieu (30) est identique avec celui de l'axe codable (20) et
que le passage tournant (26) reçoit, à l'abri des copeaux et émulsions étant produits dans le système d'usinage (3) lors de la production, la transmission sans fil de signaux d'information (26), l'amenée et la sortie d'air comprimé (7), l'amenée et la sortie d'huile sous pression (8) et
que la surveillance à l'infrarouge, de position et de processus des serreurs pivotants à huile sous pression (10), du dispositif hydraulique de serrage, des doigt d'indexage d'alignement (17) et de l'organe de pivotement actionné par air comprimé (18 et 19) pour le mouvement de la plaque de serrage (1) est réalisée, par l'intermédiaire de câbles d'alimentation électrique (29), à partir d'un système indépendant d'alimentation en énergie à courant b.t. (28) intégré dans la plaque de serrage (1).

2. *Système d'usinage avec modules mobiles de support de pièce et de serrage de pièce selon revendication 1,*
**caractérisé en ce que**
le passage toumant (6) est réalisé en forme tronqué au bout frontal prévu dans la plaque de serrage (1) et entrant ensemble avec ce dernier dans une douille conique élastique suffisamment dimensionnée et alignée dans le sens axial, formant ainsi un palier pivotant pour la plaque de serrage (1).

3. *Système d'usinage avec modules mobiles de support de pièce et de serrage de pièce selon revendication 1,*
**caractérisé en ce qu'**
un disositif de serrage hydraulique déplacé le long de l'axe codable (20) sur une plaque de serrage (1) après déverrouillage pivotant actionné par air comprimé des crampons à rainure annulaire (15) de la rainure annulaire (14), est interchangeable le long de l'axe de pivotement (30).

4. *Système d'usinage avec modules mobiles de support de pièce et de serrage de pièce selon revendication 1,*
**caractérisé en ce qu'**
une union d'accouplement à huile sous pression (9) est constituée entre les serreurs pivotants à huile de pression (10) et l'amenée et la sortie d'huile sous pression (8) et qu' une position de serrage et de serrage est établie dans la position zéro ou initiale de la plaque de serrage (1) pivotée par rapport au corps de bridage stationnaire (2).
